# FASCICULE DE BREVET EUROPEEN

(11) **EP 3 107 407 B1**
(45) Date de publication et mention de la délivrance du brevet: **18.04.2018**
(21) Numéro de dépôt: 15706910.5
(22) Date de dépôt: 12.02.2015
(51) Int. Cl.: A23G 9/06, A23G 9/08

(54) **MACHINE DE REFROIDISSEMENT PAR GLACE CARBONIQUE**
MASCHINE ZUM KÜHLEN MIT TROCKENEIS
MACHINE FOR COOLING WITH DRY ICE

(30) Priorité: 21.02.2014 FR 1451426
(43) Date de publication de la demande: 28.12.2016
(73) Titulaire: EREIE - Energy Research Innovation Engineering, 91120 Palaiseau (FR)
(72) Inventeur: CLODIC, Denis, F-91120 Palaiseau (FR); MICHAUD, Christian, F-91120 Palaiseau (FR)
(74) Mandataire: Dejade & Biset
(86) Numéro de dépôt international: PCT/FR2015/050349
(87) Numéro de publication internationale: WO 2015/124848

(56) Documents cités:
- EP-A1- 0 170 580
- EP-A1- 2 266 417
- EP-A1- 2 266 418
- US-A- 2 044 894
- US-A1- 2011 000 229

## Description

L'invention a trait aux machines de fabrication de desserts glacés ainsi qu'aux procédés pour la fabrication de ces produits.

On désigne par desserts glacés les produits tels que les crèmes glacées, glaces à l'eau ou encore sorbets.

Typiquement, une crème glacée se compose de 32% d'eau congelable, 32% d'eau non congelable, 12% de lipides congelables, 12% de lipides non congelables, de 3% de protéines et de 9% de glucides. Une glace à l'eau ou sorbet contient 62% d'eau, 25% de glucides, 10% de lipides et 3% de protéines, là aussi les fractions congelables et non congelables de l'eau et des lipides représentent 50% des masses d'eau et de lipides.

Diverses machines permettant de produire ces glaces sont connues, on les retrouve notamment dans les lieux touristiques à l'approche des beaux jours ou dans les fast-foods.

Depuis quelques décennies, les machines à glaces personnelles ont fait leur apparition. L'idée est de permettre à tout un chacun de produire des desserts glacés à la maison et dans des proportions qualifiées de familiales, avec l'avantage en plus de pouvoir personnaliser les préparations en fonction des goûts et de la gourmandise de chacun, voir par exemple la demande de brevet américain publiée sous le n° 2013/0340456 (RICHARD HOARE).

Dans ce document antérieur américain, la machine à glace comprend une cuve destinée à accueillir des ingrédients et un pétrin actionné par un moteur électrique pour mélanger la préparation. Le refroidissement de la cuve est effectué à l'aide d'une pompe à chaleur comprenant les éléments habituels à savoir un compresseur, un condenseur, un détendeur et un évaporateur. La cuve est encerclée par l'évaporateur où le fluide frigorigène s'évapore en prélevant la chaleur de la cuve, avant de rejoindre le compresseur.

Ces appareils présentent trois inconvénients majeurs. Le premier est qu'il est nécessaire, pour obtenir un dessert glacé, d'ajouter les différents ingrédients d'une recette. Le deuxième est que le dessert glacé n'est pas prêt instantanément car il nécessite un temps de préparation. Enfin, le refroidissement de la préparation est lent. Une autre machine à usage domestique pour la préparation de crème glacée est divulguée dans le brevet EP2266417. Dans cette dernière, la préparation servant à confectionner une crème glacée est dans un conteneur, lequel est refroidi par convection au contact d'un élément de refroidissement. Il existe des techniques industrielles permettant de refroidir rapidement une préparation de dessert glacé (voir par exemple publication du Massachusetts Institute of Technology intitulée "Carbon Dioxide Flash-Freezing Applied to Ice Cream Production"). Le procédé de fabrication de la crème glacée nécessite du dioxyde de carbone liquide et un prémix de crème glacée. Le terme "prémix" renvoie à une composition culinaire. Le dioxyde de carbone et le prémix sont pré-refroidis à une température proche de la température de solidification de l'eau. Le prémix est ensuite pulvérisé sous forme d'un brouillard fin dans le dioxyde de carbone liquide créant ainsi une émulsion temporaire. L'émulsion est alors pulvérisée dans une chambre à une pression inférieure et aux conditions de saturation du dioxyde de carbone à -20° C, le dioxyde de carbone se sublime et le prémix est instantanément gelé.
Ce type de dispositifs est intéressant dans un environnement industriel pour une production en masse mais ne se prête pas à une utilisation domestique. Le prémix doit par ailleurs faire l'objet d'une préparation ce qui implique une perte de temps dont il est désirable de s'affranchir. Une autre technique publiée dans la demande de brevet américain n° 2009/0277208 (KLAUS EICHLER) consiste à disposer une série de moules contenant un produit notamment de la crème glacée dans une chambre de refroidissement. Un circuit de refroidissement dans lequel circule du dioxyde de carbone refroidit les parois de la chambre de refroidissement. Pour assurer une meilleure conductivité, la chambre est remplie d'eau.
Ce dispositif présente un inconvénient majeur : il nécessite l'ajout d'eau pour permettre un refroidissement plus efficace. En effet si les parois refroidies de la chambre par le circuit de refroidissement ne sont pas en contact intime avec les parois des moules, alors le refroidissement n'est pas optimal, l'air n'étant pas un conducteur thermique aussi efficace que l'eau. A songer même que les parois des moules et de la chambre soient en contact il apparaît que la conductivité thermique est grevée au préjudice d'une consommation plus importante en dioxyde de carbone et d'une perte de temps.

Un premier objectif est de proposer une machine à glaces offrant des portions individuelles.

Un deuxième objectif est de proposer une machine à glaces permettant de produire une glace en quelques dizaines de secondes tout au plus.

Un troisième objectif est de proposer une machine à glaces dont les dimensions sont raisonnablement adaptées à un environnement domestique.

Un quatrième objectif est de proposer une machine à glaces ne nécessitant pas un prémix préparé par l'usager.

A cet effet, il est proposé en premier lieu un procédé de refroidissement d'un produit tel qu'un prémix au moyen d'une machine de refroidissement dans laquelle celle-ci comprend :
- une source d'alimentation en fluide frigorigène ;
- une cheminée destinée à évacuer le fluide frigorigène ;
- une chambre de refroidissement destinée à accueillir le produit à refroidir.

Dans cette machine, le produit est contenu dans un conteneur, ce conteneur étant disposé dans la chambre de refroidissement.

Ce procédé comprend une opération :
- de refroidissement de la chambre de refroidissement au moyen du fluide frigorigène ;
- d'évacuation du fluide frigorigène au moyen de la cheminée. L'opération de refroidissement de la chambre de refroidissement est effectuée par injection du fluide frigorigène directement dans la chambre de refroidissement, le conteneur contenant le produit étant ainsi directement au contact du fluide frigorigène, le conteneur comprenant une coque supérieure et une coque inférieure et des moyens de sécurisation de la coque inférieure à la coque supérieure, le fluide frigorigène étant détendu à pression atmosphérique par pulvérisation dans la chambre de refroidissement.

Le dispositif présente ainsi l'avantage de pouvoir préparer un dessert glacé en quelques dizaines de secondes et sans préparation nécessaire de l'utilisateur. Aussi il n'est pas nécessaire d'ajouter divers artifices pour améliorer les échanges thermiques au niveau du conteneur.

Diverses caractéristiques supplémentaires peuvent être prévues, seules ou en combinaison :
- l'opération d'évacuation se fait par évaporation du fluide frigorigène dans l'atmosphère ;
- le fluide frigorigène est du dioxyde de carbone en phase liquide et gazeuse provenant d'une source d'alimentation ;
- l'opération de refroidissement s'effectue par détente du dioxyde de carbone à la pression atmosphérique, le dioxyde de carbone devenant ainsi de la glace carbonique.

Il est proposé en second lieu une machine de refroidissement d'un produit tel qu'un prémix pour la fabrication de desserts glacés, cette machine de refroidissement comprenant :
- une source d'alimentation en fluide frigorigène ;
- une cheminée destinée à évacuer le fluide frigorigène ;
- une chambre de refroidissement agencée pour accueillir le produit ;
le produit étant contenu dans un conteneur disposé dans la chambre de refroidissement, machine dans laquelle la chambre de refroidissement est agencée de sorte que le fluide frigorigène soit en contact direct avec le conteneur, le conteneur comprenant une coque supérieure et une coque inférieure et des moyens de sécurisation de la coque inférieure à la coque supérieure.

Diverses caractéristiques supplémentaires peuvent être prévues, seules ou en combinaison :
- la source d'alimentation est un réservoir de stockage, ce réservoir de stockage contient du dioxyde de carbone en phase liquide et gazeuse ou en état supercritique;
- la machine comprend un corps, ce corps comprenant un socle définissant une assise pour accueillir le réservoir de stockage de dioxyde de carbone ;
- la machine comprend un circuit d'alimentation, ce circuit d'alimentation étant géré par une vanne ;
- la chambre de refroidissement est pourvue d'une partie supérieure et d'une partie inférieure, la partie inférieure comprenant un porte-conteneur définissant un logement pour accueillir le conteneur ;
- la machine comprend une unité de contrôle permettant de produire une glace dure ou une glace tendre, cette unité de contrôle étant agencée pour exécuter les étapes consistant à :
   - vérifier la présence de la partie inférieure sur la partie supérieure ;
   si la partie inférieure est détectée sur la partie supérieure,
   - envoyer une commande d'ouverture de la vanne ;
   - maintenir la vanne ouverte pendant une durée prédéterminée ;
   - envoyer une commande de fermeture de la vanne ;
   si le choix de l'utilisateur porte sur une glace dure,
   - envoyer une commande d'ouverture de la vanne après une attente de 10 secondes ;
   - maintenir la vanne ouverte pendant une durée prédéterminée ;
   - envoyer une commande de fermeture de la vanne ;
   - signaler que le dessert glacé est prêt.

D'autres caractéristiques et avantages apparaîtront plus clairement et de manière concrète à la lecture de la description ci-après de modes de réalisation, laquelle est faite en référence aux dessins annexés dans lesquels :
- la figure 1 est une vue en perspective d'une machine de congélation selon un mode de réalisation de l'invention ;
- la figure 2 est une vue en perspective d'une machine de congélation selon un mode de réalisation de l'invention ;
- la figure 3 est une vue éclatée d'une machine de congélation selon un mode de réalisation de l'invention ;
- la figure 4 est une vue en perspective d'une machine de congélation montrant notamment le dessous de celle-ci selon un mode de réalisation de l'invention ;
- la figure 5 est une vue schématique d'une machine de congélation selon un mode de réalisation de l'invention ;
- la figure 6 est un chronogramme ;
- la figure 7 est un chronogramme.

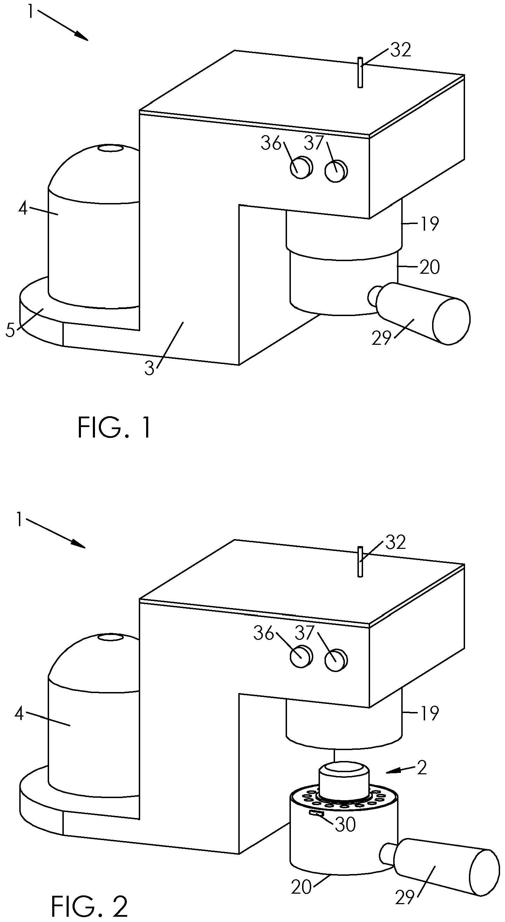

Sur les figures 1 et 2, est représentée une machine **1** de refroidissement de desserts glacés à partir d'un prémix contenu dans un conteneur ci-après nommé capsule **2.**

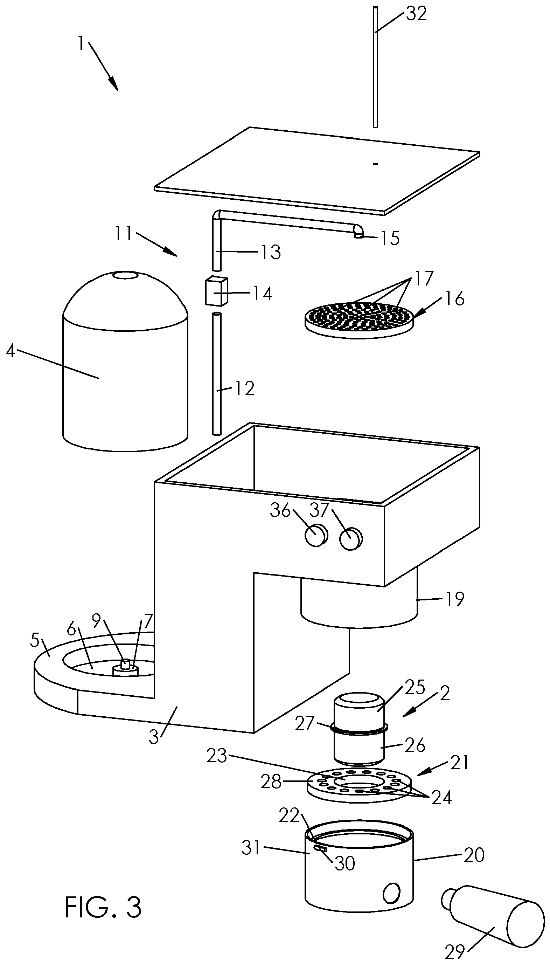

La figure 3 illustre un éclaté de la machine **1** de refroidissement dans laquelle sont visibles en détails, les composants permettant son fonctionnement selon un mode de réalisation.

En référence à la figure 3, la machine **1** de refroidissement comprend un corps **3** sur lequel viennent s'assembler une série de composants. Parmi ces composants, on recense notamment un réservoir **4** de stockage. Dans ce réservoir **4** de stockage, du dioxyde de carbone (CO₂) est stocké à l'état liquide et gazeux, respectivement dans les proportions typiques 80% et 20%, si la température est supérieure à 31°C le dioxyde de carbone est alors en état supercritique. L'état supercritique ne change pas significativement le pouvoir frigorigène du dioxyde de carbone lors de sa détente à pression atmosphérique.

Le corps **3** de la machine **1** de refroidissement est pourvu d'un socle **5** destiné à accueillir le réservoir **4** de stockage. Afin de positionner avec facilité le réservoir **4** de stockage sur le corps **3** de la machine **1** de refroidissement, le socle **5** comprend une assise **6** dont la section est identique à celle du réservoir **4** de stockage. Dans le mode de réalisation représenté sur les figures, l'assise **6** est annulaire et de section circulaire. L'assise **6** est en outre pourvue d'un pion **7** d'indexage destiné à collaborer avec une cavité **8** d'indexage située sur le réservoir **4** de stockage. Enfin l'assise **6** est également pourvue d'un doigt **9** appuyant sur un clapet **10** anti-retour (lorsque le réservoir **4** de stockage est dans l'assise **6),** permettant ainsi au dioxyde de carbone sous pression dans le réservoir **4** de stockage de s'échapper de celui-ci.

Le doigt **9** comprend une série d'orifices (non représentés) pour le passage du dioxyde de carbone, ce dernier ainsi collecté se propage sous l'effet de la pression interne du réservoir **4** de stockage dans un circuit **11** d'alimentation. Le circuit **11** d'alimentation comprend une première tubulure **12** et une deuxième tubulure **13** séparées l'une de l'autre par une vanne **14.**

La vanne **14** présente une position ouverte et une position fermée et est commutée à l'aide d'un actionneur piloté par une unité de contrôle qui sera détaillée ultérieurement.

La deuxième tubulure **13** comprend à son extrémité distale, un pulvérisateur **15.** Le pulvérisateur **15** permet de pulvériser le dioxyde de carbone sur une grille **16** de distribution. La grille **16** de distribution est ajourée par une série d'orifices **17** disposés sur toute sa surface. Le dioxyde de carbone est alors distribué à travers les orifices **17,** dans une chambre **18** de refroidissement où se situe notamment la capsule **2** contenant le prémix.

La chambre **18** de refroidissement est composée d'une partie **19** supérieure définissant un premier volume et d'une partie **20** inférieure définissant un second volume. Les premier et second volumes forment à eux deux la chambre **18** de refroidissement.

La capsule **2** repose sur un porte-conteneur, ci-après nommé porte-capsule **21.** Le porte-capsule **21** est agencé dans la partie **20** inférieure et est en appui sur une nervure **22** annulaire offrant un plan de pose pour le porte-capsule **21.** Le porte-capsule **21** présente une section sensiblement identique à celle de la partie **20** inférieure et de la partie **19** supérieure. Le porte-capsule **21** comprend en son centre un logement **23** permettant d'accueillir la capsule **2** contenant le prémix. Outre le logement **23,** le porte-capsule **21** est ajouré sur sa périphérie par une série de trous **24** formant passage pour que le dioxyde de carbone, provenant du pulvérisateur **15,** atteigne la partie inférieure. La capsule **2** comprend une coque **25** supérieure et une coque **26** inférieure. La coque **26** inférieure est équipée d'un support **27** lequel est destiné à collaborer avec une face **28** supérieure du porte-capsule **21.** Dans un mode de réalisation représenté sur les figures, le support **27** est annulaire et s'étend en saillie par rapport à la coque **26** inférieure. La coque **26** inférieure comprend en outre des moyens permettant de sécuriser la coque **25** supérieure. Ces moyens peuvent se présenter sous diverses formes. Par exemple, la coque **25** supérieure peut être pourvue d'un taraudage, et la coque **26** inférieure quant à elle d'un filetage avec une bague d'inviolabilité afin d'offrir à l'utilisateur l'assurance que le prémix contenu dans la capsule **2** n'a pas été altéré. Le prémix est donc disposé dans la capsule **2,** et celle-ci est assemblée en vissant la coque **25** supérieure sur la coque **26** inférieure et scellée grâce à la bague d'inviolabilité.

La partie **20** inférieure est dotée d'une poignée **29** de préhension afin qu'un utilisateur puisse la manipuler. La partie **20** inférieure comprend des moyens permettant de la sécuriser sur la partie **19** supérieure. Ces moyens se présentent sous la forme d'ergots **30** en saillie par rapport à une paroi **31** externe de la partie **20** inférieure.

L'évacuation du dioxyde de carbone se fait par la voie d'une cheminée **32** dont une extrémité donne dans la partie **19** supérieure de la chambre **18** de refroidissement et l'autre extrémité quant à elle donne sur l'extérieur.

La sécurisation de la partie **20** inférieure sur la partie **19** supérieure se fait en positionnant dans un premier temps la partie **20** inférieure en regard de la partie **19** supérieure comme illustré sur la figure 2, puis en insérant les ergots **30** dans des rails **33** d'indexages pratiqués dans la partie **19** supérieure et enfin en faisant pivoter la partie **20** inférieure autour de son axe de sorte que les ergots **30** basculent dans des échancrures **34.** Ainsi la partie **20** inférieure est sécurisée à la partie **19** supérieure. Des joints d'étanchéités (non représentés) sont disposés entre la partie **19** supérieure et la partie **20** inférieure afin de rendre la chambre **18** de refroidissement parfaitement hermétique.

Les moyens de sécurisation peuvent néanmoins prendre une autre forme. Ainsi au lieu d'ergots, la partie **20** inférieure peut tout à fait présenter un filetage lequel collaborerait avec un taraudage pratiqué dans la partie **19** supérieure. D'autres moyens peuvent consister en un encliquetage direct de la partie **20** inférieure sur la partie **19** supérieure, un bouton de désengagement permettant de les séparer.

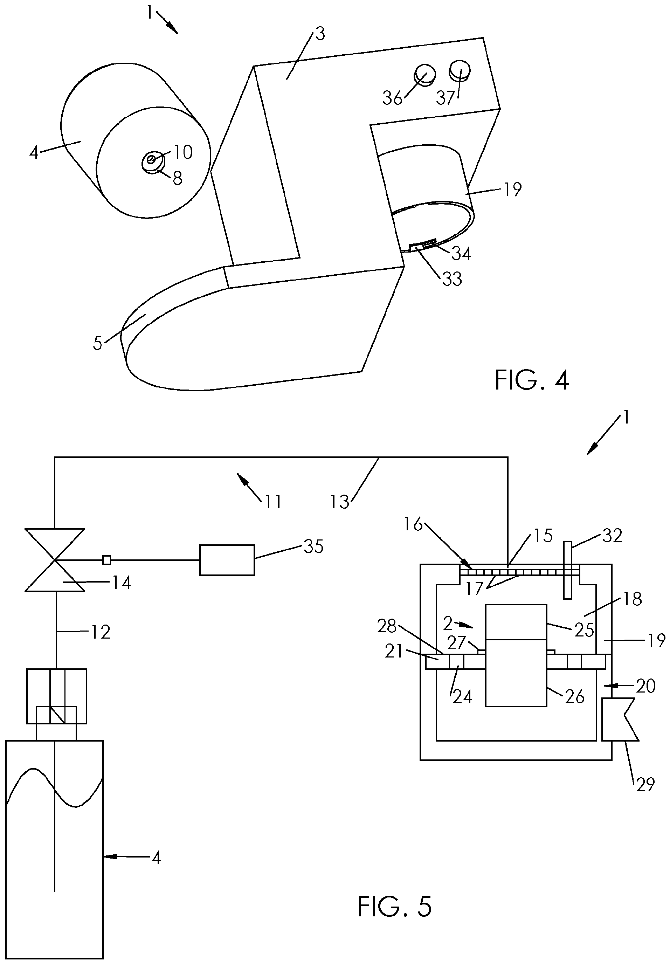

Le principe de fonctionnement de la machine **1** de refroidissement va désormais être décrit en référence à la figure 5. La figure 5 illustre une vue simplifiée des éléments de la machine **1** de refroidissement. En partant du réservoir **4** de stockage, lorsqu'une commande d'ouverture de la vanne **14** est donnée, le dioxyde de carbone liquide se propage dans le circuit **11** d'alimentation sous l'effet de la pression interne dans le réservoir **4** de stockage. Le dioxyde de carbone est pulvérisé sur la grille **16** de distribution, qui homogénéise la distribution dans la chambre **18** de refroidissement. Dans la chambre **18** de refroidissement, le dioxyde de carbone se propage autour de la capsule **2,** notamment en traversant le porte-capsule **21** par l'entremise des trous **24.** Le dioxyde de carbone subit dans la chambre **18** de refroidissement une détente ce qui implique une chute brutale de la température dans la chambre **18** de refroidissement et de ce fait le refroidissement rapide de la capsule **2** et du prémix qu'elle contient.

Le phénomène de chute brutale de la température s'explique grâce au diagramme de phase du dioxyde de carbone. Initialement, dans le réservoir **4** de stockage, le dioxyde de carbone est instable, c'est à dire qu'il est en phase gazeuse et liquide à la fois. Nous considérons dans ce qui suit que le dioxyde de carbone est stocké à 20 °C. A cette température, le dioxyde de carbone est stocké dans le réservoir **4** de stockage à une pression d'environ 57,3 atm (1 atm vaut 101 325 Pa).

Dans la chambre **18** de refroidissement, le dioxyde de carbone est brusquement détendu à la pression atmosphérique (1 atm). La température chute alors brusquement de 20 °C (température ambiante) à -78 °C et cela, quasiment instantanément. Le dioxyde de carbone se solidifie formant ce que l'on appelle communément de la glace carbonique. Ensuite à la pression atmosphérique, la glace carbonique se sublime en absorbant la chaleur et donc en refroidissant la capsule. Cela se traduit sur le diagramme de phase Température - entropie du CO₂ par une sublimation à -78°C soit 195 K avec une chaleur de sublimation de plus de 550 kJ/Kg et une capacité calorifique moyenne de 1,5 kJ/(kg.K) entre -78°C et 20°C. Ce grand écart de température et cette grande chaleur de changement de phase permet de refroidir puis de congeler 50% de la masse d'eau du prémix et 50% des lipides avec une enthalpie de 330 kJ/kg pour l'eau et 63 kJ/kg pour les lipides et ce pour un refroidissement de 20°C à -12°C ou -18°C avec des capacités calorifiques respectives de l'eau et des lipides de l'ordre de 4,18 kJ/(kg.K) et 2,1 kJ/(kg.K).

Pour une crème glacée composée d'eau congelable à hauteur de 32%, de lipides congelables à hauteur de 12%, 3% de protéines et 9% de glucides. Nous aurons respectivement besoin d'une chaleur latente d'environ 100 kJ/kg pour l'eau (32% x 330 kJ/kg), d'environ 8 kJ/kg pour les lipides congelables (12% x 63), ceci pour passer d'une température de 20°C à une température de 0°C. Puis 10 kJ/kg en plus sont nécessaires pour que le prémix atteigne une température de -12°C. Au total il faut environ 120 kJ/kg pour refroidir le prémix à la température souhaitée. En comparaison avec la chaleur de sublimation du CO₂ qui est de 550 kJ/kg comme précédemment énoncé, la chaleur latente nécessaire pour refroidir le prémix est très inférieure.

Afin d'assurer un refroidissement en un minimum de temps, on s'assure que la chaleur latente de changement de phase du CO₂ est environ au moins 5 fois supérieure aux besoins de refroidissement du dessert glacé. En tenant compte des pertes thermiques associées à la circulation du CO₂ liquide dans la machine et au refroidissement du porte-capsule qui absorbe une partie de la chaleur du CO₂, le calcul démontre que la masse de glace carbonique nécessaire au refroidissement est de 50% de la masse de dessert glacé et ceci dans les conditions les plus défavorables. Par conditions les plus défavorables, on entend à température ambiante et en première utilisation de la machine. En effet une fois que la machine a été utilisée celle-ci reste froide un certain temps.

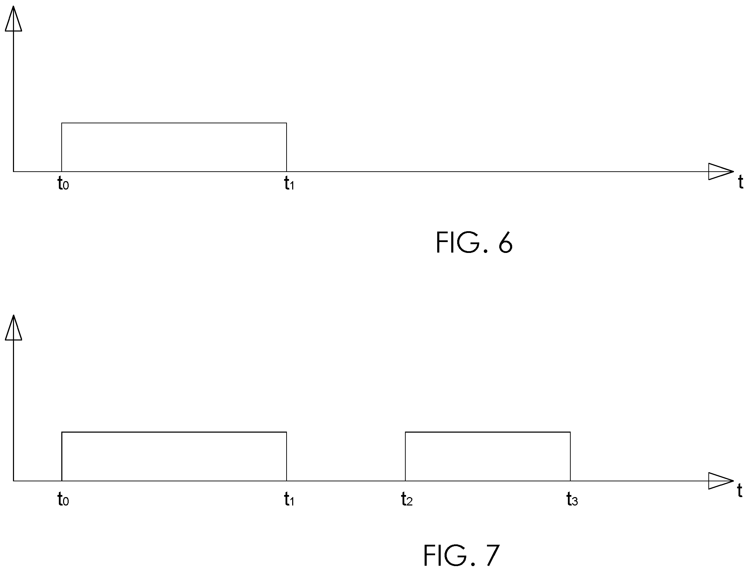

La machine **1** de refroidissement comprend également une unité **35** de contrôle permettant d'effectuer les différentes tâches pour la production d'un dessert glacé. Un programme est implémenté dans l'unité **35** de contrôle. Le programme informatique démarre lorsque l'utilisateur presse un des deux boutons **36, 37.** Le bouton **36** glace tendre permet de refroidir la capsule **2** à une température d'environ -12 °C ce qui produit une glace dont la texture est tendre. Le bouton **37** glace dure implique quant à lui un refroidissement de la capsule **2** à une température de -18 °C ce qui produit une glace dont la texture est dure. Lorsque le bouton **36** glace tendre est pressé, le programme informatique vérifie tout d'abord que la partie **20** inférieure est positionnée sur la partie **19** supérieure grâce à un détecteur de position (non représenté). Si le détecteur de position ne détecte pas la partie **20** inférieure, alors le processus de congélation ne démarre pas. Dans le cas où le détecteur renvoie un signal positif signifiant que la partie **20** inférieure est sécurisée sur la partie **19** supérieure alors le programme informatique envoie un signal d'ouverture à un instante t₀ à la vanne **14** comme illustré sur la figure 6, laquelle vanne **14** s'exécute après un délai appelé temps de réponse. La vanne **14** reste ouverte pendant une durée prédéterminée, laquelle permet de laisser passer la quantité nécessaire de dioxyde de carbone. A un instant t₁ le programme informatique envoie à la vanne **14** un signal de fermeture. Le dioxyde de carbone migre en direction de la chambre **18** de refroidissement où celui-ci devient de la glace carbonique. La glace carbonique refroidit le capsule **2** jusqu'à une température de -12 °C en environ 30 secondes. Le programme déclenche un signal sonore lorsque le dessert glacé est prêt.

Lorsque le bouton **37** glace dure est pressé, le programme informatique vérifie la présence de la partie **20** inférieure et lance le processus de refroidissement renforcé. A un instant t₀ un signal d'ouverture est envoyé et la vanne **14** s'ouvre puis se ferme à un instant t₁. Le refroidissement est ensuite renforcé en envoyant à un instant t₂, soit 10 secondes après t₁, un nouveau signal d'ouverture à la vanne **14,** puis celle-ci est fermée à un instant t₃ après une durée prédéterminée comme illustré sur la figure 7. Le dessert glacé est alors congelé à une température de -18 °C.

La machine et le procédé offrent à l'utilisateur un confort sans précédent. Les capsules **2**, disponibles pour tous les goûts, permettent de déguster une portion individuelle d'un dessert glacé tout en choisissant le mode de refroidissement.

L'invention utilise également les propriétés du dioxyde de carbone afin de congeler rapidement la capsule **2.** Ceci offre à l'utilisateur une glace prête en quelques dizaines de secondes.

Enfin la machine ne nécessite quasiment aucun nettoyage puisque la glace carbonique se sublime, et s'évacue sans laisser de traces. Aucun entretien n'est nécessaire.

## Revendications

1. Procédé de refroidissement d'un prémix pour la fabrication de desserts glacés au moyen d'une machine **(1)** de refroidissement dans laquelle celle-ci comprend :
- une source **(4)** d'alimentation en fluide frigorigène ;
- une cheminée **(32)** destinée à évacuer le fluide frigorigène ;
- une chambre **(18)** de refroidissement destinée à accueillir le prémix à refroidir ;
machine **(1)** dans laquelle, le prémix est contenu dans un conteneur **(2),** ce conteneur **(2)** étant disposé dans la chambre **(18)** de refroidissement, dans lequel ce procédé comprend une opération :
- de refroidissement de la chambre (**18**) de refroidissement au moyen du fluide frigorigène ;
- d'évacuation du fluide frigorigène au moyen de la cheminée (**32**) ; **caractérisé en ce que** l'opération de refroidissement de la chambre (**18**) de refroidissement est effectuée par injection du fluide frigorigène directement dans la chambre **(18)** de refroidissement, le conteneur (**2**) contenant le produit étant ainsi directement au contact du fluide frigorigène, le conteneur **(2)** comprenant une coque **(25)** supérieure et une coque **(26)** inférieure et des moyens de sécurisation de la coque **(26)** inférieure à la coque **(25)** supérieure, le fluide frigorigène étant détendu à pression atmosphérique par pulvérisation dans la chambre **(18)** de refroidissement.

2. Procédé de refroidissement selon la revendication 1, **caractérisé en ce que** l'opération d'évacuation se fait par évaporation du fluide frigorigène dans l'atmosphère.

3. Procédé de refroidissement selon l'une quelconque des revendications précédentes, **caractérisé en ce que** le fluide frigorigène est du dioxyde de carbone en phase liquide et gazeuse provenant de la source **(4)** d'alimentation.

4. Procédé de refroidissement selon la revendication 3, **caractérisé en ce que** l'opération de refroidissement s'effectue par détente du dioxyde de carbone à la pression atmosphérique, le dioxyde de carbone devenant ainsi de la glace carbonique.

5. Machine (**1**) de refroidissement d'un prémix pour la fabrication de desserts glacés, cette machine (**1**) de refroidissement comprenant :
- une source (**4**) d'alimentation en fluide frigorigène ;
- une cheminée (**32**) destinée à évacuer le fluide frigorigène ;
- une chambre (**18**) de refroidissement agencée pour accueillir le produit ;
le produit étant contenu dans un conteneur (**2**) disposé dans la chambre (**18**) de refroidissement,
**caractérisée en ce que** la chambre (**18**) de refroidissement est agencée de sorte que le fluide frigorigène soit en contact direct avec le conteneur (**2**), le conteneur (**2**) comprenant une coque (**25**) supérieure et une coque (**26**) inférieure et des moyens de sécurisation de la coque (**26**) inférieure à la coque (**25**) supérieure.

6. Machine (**1**) de refroidissement selon la revendication 5, **caractérisée en ce que** la source (**4**) d'alimentation est un réservoir de stockage, ce réservoir (**4**) de stockage contient du dioxyde de carbone en phase liquide et gazeuse ou supercritique.

7. Machine (**1**) de refroidissement selon la revendication 6, **caractérisée en ce que** la machine (**1**) comprend un corps (**3**), ce corps comprenant un socle (**5**) définissant une assise (**6**) pour accueillir le réservoir (**4**) de stockage de dioxyde de carbone.

8. Machine (**1**) de refroidissement selon l'une quelconque des revendications 5 à 7, **caractérisée en ce que** la machine (**1**) comprend un circuit (**11**) d'alimentation, ce circuit (**11**) d'alimentation étant géré par une vanne (**14**).

9. Machine (**1**) de refroidissement selon l'une quelconque des revendications 5 à 8, **caractérisée en ce que** la chambre (**18**) de refroidissement est pourvue d'une partie (**19**) supérieure et d'une partie (**20**) inférieure, la partie (**20**) inférieure comprenant un porte-conteneur (**21**) définissant un logement pour accueillir le conteneur (**2**).

10. Machine **(1)** de refroidissement selon la revendication 9, **caractérisée en ce que** la machine comprend une unité **(35)** de contrôle permettant de produire une glace à -18°C ou une glace à -12°C, cette unité **(35)** de contrôle étant agencée pour exécuter les étapes consistant à :
- vérifier la présence de la partie **(20)** inférieure sur la partie **(19)** supérieure ;
si la partie **(20)** inférieure est sécurisée sur la partie **(19)** supérieure,
- envoyer une commande d'ouverture de la vanne **(14)** à t₀ ;
- maintenir la vanne **(14)** ouverte pendant une durée prédéterminée ;
- envoyer une commande de fermeture de la vanne **(14)** à t₁ ;
si le choix de l'utilisateur porte sur une glace à -18°C,
- envoyer une commande de réouverture de la vanne **(14)** après une attente de quelques secondes, à t₂ ;
- maintenir la vanne (**14**) ouverte pendant une durée prédéterminée ;
- envoyer une commande de fermeture de la vanne (**14**) à t₃ ;
- signaler que le dessert glacé est prêt.

## Patentansprüche

1. Verfahren zum Kühlen eines Ausgangsmaterials für die Zubereitung von Eisdesserts mittels einer Kältemaschine (1), bei der diese Folgendes umfasst:
- eine Quelle (4) zur Zuführung von Kältemittel,
- einen Abzug (32), der zum Abführen des Kältemittels bestimmt ist,
- eine Kältekammer (18), die zur Aufnahme des zu kühlenden Ausgangsmaterials bestimmt ist,
wobei das Ausgangsmaterial in der Maschine (1) in einem Behälter (2) enthalten ist, wobei dieser Behälter (2) in der Kältekammer (18) angeordnet ist, wobei dieses Verfahren einen Vorgang
- des Kühlens der Kältekammer (18) mittels des Kältemittels,
- des Abführens des Kältemittels mittels des Abzugs (32)
umfasst,
**dadurch gekennzeichnet, dass** der Vorgang des Kühlens der Kältekammer (18) durch direktes Einspritzen des Kältemittels in die Kältekammer (18) erfolgt, wobei der das Produkt enthaltende Behälter (2) somit direkt in Kontakt mit dem Kältemittel ist, wobei der Behälter (2) eine obere Schale (25) und eine untere Schale (26) und Mittel zur Befestigung der unteren Schale (26) an der oberen Schale (25) umfasst, wobei das Kältemittel durch Sprühen in die Kältekammer (18) auf Umgebungsluftdruck entspannt wird.

2. Kühlungsverfahren nach Anspruch 1, **dadurch gekennzeichnet, dass** der Abführungsvorgang durch Verdampfung des Kältemittels in der Atmosphäre erfolgt.

3. Kühlungsverfahren nach einem der vorhergehenden Ansprüche, **dadurch gekennzeichnet, dass** das Kältemittel Kohlendioxid in Flüssig- und Gasphase ist, das aus der Zuführungsquelle (4) stammt.

4. Kühlungsverfahren nach Anspruch 3, **dadurch gekennzeichnet, dass** der Kühlungsvorgang durch Entspannen des Kohlendioxids auf Umgebungsluftdruck erfolgt, wobei aus Kohlendioxid somit Trockeneis wird.

5. Maschine (1) zum Kühlen eines Ausgangsmaterials für die Zubereitung von Eisdesserts, wobei diese Kältemaschine (1) Folgendes umfasst:
- eine Quelle (4) zur Zuführung von Kältemittel,
- einen Abzug (32), der zum Abführen des Kältemittels bestimmt ist,
- eine Kältekammer (18), die zur Aufnahme des Produkts ausgelegt ist,
wobei das Produkt in einem in der Kältekammer (18) angeordneten Behälter (2) enthalten ist,
**dadurch gekennzeichnet, dass** die Kältekammer (18) derart angeordnet ist, dass das Kältemittel in direktem Kontakt mit dem Behälter (2) ist, wobei der Behälter (2) eine obere Schale (25) und eine untere Schale (26) und Mittel zur Befestigung der unteren Schale (26) an der oberen Schale (25) umfasst.

6. Kältemaschine (1) nach Anspruch 5, **dadurch gekennzeichnet, dass** die Zuführungsquelle (4) ein Vorratsreservoir ist, wobei dieses Vorratsreservoir (4) Kohlendioxid in Flüssig- und Gasphase oder überkritischer Phase enthält.

7. Kältemaschine (1) nach Anspruch 6, **dadurch gekennzeichnet, dass** die Maschine (1) einen Körper (3) umfasst, wobei dieser Körper einen Sockel (5) umfasst, der einen Sitz (6) zur Aufnahme des Kohlendioxidvorratsreservoirs (4) definiert.

8. Kältemaschine (1) nach einem der Ansprüche 5 bis 7, **dadurch gekennzeichnet, dass** die Maschine (1) einen Versorgungskreislauf (11) umfasst, wobei dieser Versorgungskreislauf (11) durch ein Ventil (14) gesteuert wird.

9. Kältemaschine (1) nach einem der Ansprüche 5 bis 8, **dadurch gekennzeichnet, dass** die Kältekammer (18) mit einem oberen Teil (19) und einem unteren Teil (20) versehen ist, wobei der untere Teil (20) einen Behälterhalter (21) umfasst, der eine Aufnahme für den Behälter (2) definiert.

10. Kältemaschine (1) nach Anspruch 9, **dadurch gekennzeichnet, dass** die Maschine eine Steuereinheit (35) umfasst, die die Herstellung von Eis bei - 18°C oder Eis bei -12°C gestattet, wobei diese Steuereinheit (35) dazu ausgelegt ist, die Schritte durchzuführen, die aus Folgendem bestehen:
- Verifizieren des Vorliegens des unteren Teils (20) an dem oberen Teil (19),
ob der untere Teil (20) am oberen Teil (19) befestigt ist,
- Senden eines Befehls zum Öffnen des Ventils (14) bei t₀,
- Offenhalten des Ventils (14) während einer vorbestimmten Dauer,
- Senden eines Befehls zum Schließen des Ventils (14) bei t₁,
wenn der Benutzer Eis bei -18°C gewählt hat,
- Senden eines Befehls zum erneuten Öffnen des Ventils (14) nach einer Wartezeit von einigen Sekunden bei t₂,
- Offenhalten des Ventils (14) während einer vorbestimmten Dauer,
- Senden eines Befehls zum Schließen des Ventils (14) bei t₃,
- Melden, dass das Eisdessert fertig ist.

## Claims

1. Method for cooling a premix for the production of iced desserts by means of cooling machine (1) wherein it comprises:
- a source (4) of supply of refrigerant;
- a chimney (32) intended to evacuate the refrigerant;
- a cooling chamber (18) intended to accommodate the premix to be cooled;
machine (1) in which the premix is contained in a container (2), this container (2) being arranged in the cooling chamber (18), wherein this method comprises an operation:
- of cooling of the cooling chamber (18) by means of the refrigerant;
- of evacuation of the refrigerant by means of the chimney (32);
**characterized in that** the operation of cooling of the cooling chamber (18) is performed by injection of the refrigerant directly into the cooling chamber (18), the container (2) containing the product being thus directly in contact with the refrigerant, the container (2) comprising a top shell (25) and a bottom shell (26) and means for securing the bottom shell (26) to the top shell (25), the refrigerant being expanded at atmospheric pressure by spraying into the cooling chamber (18).

2. Cooling method according to Claim 1, **characterized in that** the evacuation operation is done by evaporation of the refrigerant into the atmosphere.

3. Cooling method according to either one of the preceding claims, **characterized in that** the refrigerant is carbon dioxide in liquid and gaseous phase originating from the supply source (4).

4. Cooling method according to Claim 3, **characterized in that** the cooling operation is performed by expansion of the carbon dioxide at atmospheric pressure, the carbon dioxide thus becoming dry ice.

5. Machine (1) for cooling a premix for the production of iced desserts, this cooling machine (1) comprising:
- a source (4) of supply of refrigerant;
- a chimney (32) intended to evacuate the refrigerant;
- a cooling chamber (18) arranged to accommodate the product;
the product being contained in a container (2) arranged in the cooling chamber (18), **characterized in that** the cooling chamber (18) is arranged such that the refrigerant is in direct contact with the container (2), the container (2) comprising a top shell (25) and a bottom shell (26) and means for securing the bottom shell (26) to the top shell (25).

6. Cooling machine (1) according to Claim 5, **characterized in that** the supply source (4) is a storage tank, this storage tank (4) contains carbon dioxide in liquid and gaseous or supercritical phase.

7. Cooling machine (1) according to Claim 6, **characterized in that** the machine (1) comprises a body (3), this body comprising a base (5) defining a seat (6) for accommodating the carbon dioxide storage tank (4).

8. Cooling machine (1) according to any one of Claims 5 to 7, **characterized in that** the machine (1) comprises a supply circuit (11), this supply circuit (11) being managed by a valve (14).

9. Cooling machine (1) according to any one of Claims 5 to 8, **characterized in that** the cooling chamber (18) is provided with a top part (19) and a bottom part (20), the bottom part (20) comprising a container-holder (21) defining a housing for accommodating the container (2).

10. Cooling machine (1) according to Claim 9, **characterized in that** the machine comprises a control unit (35) making it possible to produce ice at -18°C or ice at -12°C, this control unit (35) being arranged to execute the steps of:
- checking the presence of the bottom part (20) on the top part (19);
if the bottom part (20) is secured to the top part (19),
- sending a command to open the valve (14) at t₀;
- keeping the valve (14) open for a predetermined time;
- sending a command to close the valve (14) at t₁; if the choice of the user relates to ice at -18°C,
- sending a command to open the valve (14) after a wait of a few seconds, at t₂;
- keeping the valve (14) open for a predetermined time;
- sending a command to close the valve (14) at t₃;
- signalling that the iced dessert is ready.
